(19) Europäisches Patentamt
European Patent Office
Office européen des brevets

(11) EP 2 114 647 B1

(12) **EUROPEAN PATENT SPECIFICATION**

(45) Date of publication and mention
of the grant of the patent:
**06.01.2016 Bulletin 2016/01**

(51) Int Cl.:
*B29B 9/12* (2006.01)    *B29B 9/16* (2006.01)
*B29B 7/88* (2006.01)    *B01F 3/12* (2006.01)
*B01F 7/16* (2006.01)    *B01F 13/00* (2006.01)

(21) Application number: **08702247.1**

(22) Date of filing: **10.01.2008**

(86) International application number:
**PCT/IB2008/000085**

(87) International publication number:
**WO 2008/090427 (31.07.2008 Gazette 2008/31)**

(54) **THERMOPLASTIC AND/OR THERMOSETTING POLYMER GRANULE, COLOURED AND/OR CONTAINING ADDITIVES, AND RELATIVE DYEING AND/OR ADDITIVE ADDITION PROCESS AND A PROCESS**

THERMOPLASTISCHES UND/ODER WÄRMEHÄRTBARES POLYMERGRANULAT, FARBIG UND/ODER MIT ADDITIVEN UND ZUGEHÖRIGES FÄRBE- UND/ODER ADDITIVZUGABEVERFAHREN, UND EIN VERFAHREN

GRANULÉ DE POLYMÈRE THERMOPLASTIQUE ET/OU THERMODURCISSABLE COLORÉ ET/OU CONTENANT DES ADDITIFS ET PROCÉDÉ DE TEINTURE ET/OU D'AJOUT D'ADDITIFS ASSOCIÉ, ET UN PROCÉDÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.01.2007 IT MI20070089**

(43) Date of publication of application:
**11.11.2009 Bulletin 2009/46**

(73) Proprietor: **Colheng S.A.S Di Fochesato Colombani Filippo & C.**
**36015 Schio (VI) (IT)**

(72) Inventor: **FOCHESATO COLOMBANI, Filippo**
**36015 Schio (Vicenza) (IT)**

(74) Representative: **Bottero, Carlo et al**
**Barzanò & Zanardo Milano S.p.A.**
**Via Borgonuovo, 10**
**20121 Milano (IT)**

(56) References cited:
EP-A- 0 290 092    US-A- 3 024 010
US-A- 3 591 409    US-A- 3 967 005
US-A- 4 510 271    US-A- 4 648 719
US-A- 4 915 987    US-A- 5 006 368
US-A- 5 041 310    US-A1- 2001 019 515

**Description**

The present invention relates to a thermoplastic and/or thermosetting granule and/or powder and/or flake, coloured and/or containing additives, a process for the dyeing and/or additivation of granules and/or flakes and/or powders of thermoplastic and/or thermosetting polymers.

Various methods are known in the state of the art for effecting the dyeing and/or additivation of granules and/or flakes and/or powders of thermoplastic polymers by means of an extrusion process.

In the processes according to the state of the art, the thermoplastic polymer is mixed with the suitable dyeing substances, pigments or masterbatches and/or additives, it is then extruded at a temperature higher than the melting or softening point of the polymer. The close mixing necessary for a homogeneous distribution of the colour and/or additives is consequently obtained in the molten or gelled phase.

It is therefore necessary to reach the melting or softening point of the polymer in order to have the necessary fluidity for obtaining a close mixing and a uniform distribution of the dyeing substance and/or additive. The molten mixture is then extruded through a die in the form of spaghetti and then cooled, in air or water, and cut into cylindrical granules having dimensions varying from 0.5 to 2 mm.

With this process, however, it is necessary to provide the material, in the form of heat, with both the energy necessary for increasing the temperature up to the softening or melting point, and also with energy equal to the specific melting heat of the material to induce the passage from the solid to the molten state.

In the process according to the state of the art, the thermoplastic polymer undergoes strong thermomechanical stress which causes a degradation of the mechanical and optical properties of the polymer. In general the extruded granule has lower mechanical resistance characteristics, due to the reduction in the average molecular weight, and a loss of transparency or a colour change with respect to the starting product.

In addition to this, the extrusion process produces waste materials, called "heads" and " tails", relating to the starting phase and the end of production, wherein the extrusion process still does not have, or no longer has, a regime trend for the operating temperatures and pressures. There is also waste relating to the purging material during the passage from one colour to another or from one polymer to another, said purge being necessary for cleaning the apparatus. These processing drops particularly affect the cost of small productions and they become more significant, the larger the capacity of the extruder and the smaller the production required.

Furthermore, in general the extrusion process is a continuous process, wherein the dosage of the various materials and the control of the production parameters is more demanding with respect to batch processes.

The high energy necessary for the melting and mixing of the polymer in molten phase requires particularly complex and expensive plants, also characterized by costly maintenance, as most of the heat produced is generated by the friction between the polymer, the extruder screw and cylinder, all parts which consequently become rapidly worn.

In the methods according to the state of the art described herein, extruders having a small or medium capacity are used, up to 300 or 500 kg/h for the production of medium-small lots, in order to obtain flexibility and fewer rejects, whereas extruders of 500 to over 1,500 kg/h are used for the production of large or very large lots.

The types of extruders and also satellite plants connected therewith, are specific for the processing of some polymer families. In particular, the geometry of the screw, the L/D ratio, the compression ratio are critical for obtaining a satisfactory result.

A screw for polyolefins, for example, is not suitable for the processing of engineering polymers, whereas an extruder for PET must have a drying plant to remove the water which would hydrolyze the product during extrusion.

If coloured and/or additivated powder products are required, suitable, for example for rotomoulding, the granule must undergo a new grinding process, after the extrusion process, in order to achieve the desired particle-size.

Grinding processes are generally longer and more expensive than extrusion processes, both as a result of the plant equipment involved and also due to the long cleaning times of the mills and consequently the production of small lots, coloured and/or additivated by samples, proves to be lengthy, expensive and complex to run.

In the case of thermosetting polymers, on the contrary, the addition of additives and/or dyeing cannot be effected with standard extrusion process, but only by adopting very particular expedients.

The heat necessary for softening the polymer, a necessary condition for a good mixing of the colour and/or additives, would cause an irreversible thermocuring of the material, which could no longer be further processed by injection moulding.

The dyeing and/or addition of these materials is currently effected directly during the injection moulding phase by means of particular masterbatches. The colour and/or additives are dispersed in the melted product during the phase immediately preceding injection into the mould in which the final curing of the material takes place. Alternatively, a half-cured polymer can be produced by extrusion, and the same will complete its curing in the mould. The process, however, is delicate and costly.

In short, the state of the art only allows the dyeing and/or additivation of thermoplastic polymeric materials during the extrusion phase by bringing the material to the molten state and dispersing the dyes and/or additives in the molten mass by means of a mechanical action. This technique is costly from an energy point of view, it changes and causes a deterioration in the optical-mechanical properties of the polymer, it suffers from production decreases which become more significant the smaller the production required, it needs specific plants depending on the material produced and, in the case of the production of powders by rotomoulding, it requires a further grinding process of the dyed and/or additivated polymer.

Alternatively, it is possible to add a masterbatch, i.e. a concentrate of colours and/or additives to the thermoplastic and/or thermosetting polymeric material to be treated, in a dry mixture. The masterbatch dyes and/or additivates the thermoplastic and/or thermosetting polymeric material during the formation of the final product by injection moulding or by extrusion into films, sheets, textile fibre.

This technique however does not give good results with all polymers, particularly in the case of polymers having high viscosities of the molten product, containing shock-resistant materials, such as rubber, for example, or containing reinforcing mineral fillers, such as glass fibres, for example. In these cases, the low mixing capacity of the injection presses with respect to these materials, produces manufactured products having surface defects, such as colour streaks or poor distribution of the additives. This technique is also practically inapplicable for small sample colour lots as it is economically unfavourable to ask the masterbatch supplier for a colour study and the supply of very few kilos of product, for example 5 kg, suitable for colouring 500 kg of material. The final colour precision is also poor as the colour changes of the neutral resin between different lots and/or suppliers are generally not taken into consideration.

Alternatively, a partial dyeing and/or additivation process of granules and/or thermoplastic and/or thermosetting granules, by means of high-speed mixers, is known in the state of the art. According to this technique, mainly used for PVC (polyvinylchloride) the polymer in powder form is additivated and/or dyed with additives and/or pure pigments in very fine powder. The mixture thus composed is heated by friction to the first softening temperature of the polymer, a temperature at which the pigment and/or additives do not melt; thanks to their particularly fine form and assisted by the increase in temperature, the pigment and/or additives in powder form adhere to the surface of the polymer. This mixture is then cooled and sent to an extruder which effects close mixing by melting or gelation of the polymer and its extrusion into granules. The process in the high-speed mixer is consequently only an intermediate phase for the mixing and distribution of the additives and/or pigments, as a preparation for the extrusion phase, without which the product would be easily dirtied and, if transformed, would cause dots and distribution defects.

US3591409 discloses a granule, flake or powder of a thermoplastic and/or thermosetting polymer, coloured and/or containing additives, consisting of a nucleus of neutral thermoplastic and/or thermosetting polymer and a surface layer of colouring agent and/or additive wherein the colouring agent are dispersed on a low-melting matrix with high viscosity, having a melting point ranging from 50 to 150 °C.

US4915987 relates to a method of improving the quality of the surface of solid particles. The method includes fixing material different from the solid particles to the surface of the solid particles by the use of an impact striking device. The material fixed to the solid particles can be other solid particles or particles contained in a liquid, which forms a film.

EP290092 describes a process for the preparation of a granule, flake or powder of thermoplastic and/or thermosetting polymer, coloured and/or containing additives, by mixing plastic granules with particles of a colouring agent composition.

US4648719 shows a device for the preparation of granules, flakes and/or powders of thermoplastic and/or thermosetting polymers, which includes a high-speed mixer, comprising a container and several pairs of mixing blades.

The process according to the present invention overcome the drawbacks which characterize the known art.

In particular, an objective of the present invention is to produce a coloured and/or additivated granule which is simple to prepare and with particularly interesting stability properties.

A further objective of the present invention is to provide a process which allows practically any thermoplastic and/or thermosetting polymer to be coloured and/or additivated.

Another objective of the present invention is to provide a process which allows already coloured, recycled or used starting products to be coloured and/or additivated, obtaining the exact colour desired.

Yet another objective of the present invention is to provide a process which allows thermoplastic powders for rotomoulding, to be coloured and/or additivated, starting directly from neutral powders, obtaining a powder exactly for rotomoulding having the desired colour, without a further grinding and sieving phase.

These objectives and others are achieved according to the object of the present invention.

An object of the present invention therefore relates to a granule, flake or powder of a thermoplastic and/or thermosetting polymer, coloured and/or containing additives, consisting of a nucleus of neutral thermoplastic and/or thermosetting polymer and a surface layer of dye and/or additive.

Another object of the present invention relates to a process for the preparation of a granule, flake or powder of thermoplastic and/or thermosetting polymer, coloured and/or containing additives, characterized in that it comprises the following passages:

a) the granule, flake or powder of polymer to be dyed and/or additivated is placed in a high-speed mixer and heated to the melting temperature of the dye(s) and/or additive(s);

b) the dye(s) and/or additive(s) are added to the mixer and the system mixed at a high speed, maintaining the temperature reached in phase a), and

c) the granule, flake or powder of thermoplastic and/or thermosetting polymer, coloured and/or containing additives is discharged.

The thermoplastic polymer is preferably selected from high and low density polyethylene (HDPE and LDPE), linear polyethylene (LLDPE), polyacrylonitrile-butadiene-styrene (ABS), polypropylene (PP) and its copolymers, polymethylmethacrylate (PMMA) and its copolymers, polyethyleneterephthalate (PET) and its copolymers, polybutyleneterephthalate (PBT) and its copolymers, polycarbonate (PC) and its copolymers, crystal and high impact polystyrene (GPPS and HIPS), poly-styrene-acrylonitrile (SAN), elastomers and thermoplastic rubbers based on styrene (SB-SBS-SEBS), polyethylvinylacetate (EVA), polyvinylchloride (PVC) and plasticized polyvinylchloride, acetal resins and their copolymers, polyamides /(PA 6, 6.6, 6.10, 6.11, 6.12), polysulfones, polyphenylene oxide (PPO), polyphenylene-ether (PPE), olefinic elastomers (EPR, EPDM), cellulose acetate, thermoplastic polyurethane (TPU), also filled with mineral fillers and glass fibres/balls, and/or blends thereof, other polymers deriving from polycondensation and polyaddition.

The thermosetting polymer is preferably a phenolic resin, a melaminic resin or a phenol-melaminic resin, and/or mixtures thereof.

The dyes are dispersed on a low-melting matrix, with a melting point ranging from 50 to 150°C, and in any case lower than the melting point of the thermoplastic and/or thermosetting polymer to be coloured and/or additivated.

The low-melting matrix is obviously compatible with the neutral polymers listed above.

Neutral thermoplastic and/or thermosetting polymer refers to the polymer to be coloured and/or additivated.

The dyes are preferably pigmentary preparations or soluble dyes, in outer powder form.

Outer powder form refers to gross powders, without the fraction having size lower than 50 micron, which are consequently more easy-flowing, less dirtiable and do not fly into the air if shaken.

The dyes have a particle-size which varies from 50 to 1,500 microns, and is preferably equal to 300 microns approximately. Said dyes are also dispersed on a low-melting matrix, with a melting point ranging from 50 to 150°C, normally consisting of mixtures of fatty acids.

The additives or chemical modifiers which can be added to the product with the process according to the present invention can be selected from UV stabilizers, optical bleaching agents, thermostabilizers, antioxidants, flame-retardant additives, grafting agents, fluidity modifiers, antistatic agents, plasticizers, oiling agents, mineral fillers, gloss modifiers, mould detachers, reflection modifiers (glitters or coloured fibres), as such or dispersed on the low-melting matrix.

The additives are generally pure and when they are used as such, they are integrated in the surface layer thanks to the low-melting matrix in which the dye is dispersed.

The granule and/or flake and/or powder of a thermoplastic and/or thermosetting polymer according to the present invention consists of a neutral thermoplastic and/or thermosetting polymer nucleus, said nucleus having a surface layer of dye and/or low-melting additive uniformly distributed on the outer surface of the nucleus itself. Other infusible additives can be dispersed and englobed in this surface layer.

The surface layer of the dye and/or low-melting additive uniformly distributed on the outer surface of the nucleus can be applied externally by means of a thermal process which comprises heating and mixing.

The granule and/or flake and/or powder of a thermoplastic and/or thermosetting polymer according to the present invention, consisting of a neutral thermoplastic and/or thermosetting polymer nucleus, said nucleus having a surface layer of dye and/or low-melting additive uniformly distributed on the outer surface of the nucleus itself, can also comprise an additional film or protective layer applied externally to the film or layer of dye and/or additive.

In particular, said protective layer consists of a sequestering resin and/or a sealing filmogen, resin, preferably a sequestering resin.

The supplementary protective layer can be applied by mixing and melting of the sequestering resin in powder form, and/or by mixing and subsequent drying and coalescence of the sealing filmogen resin(s) with water or solvent.

The supplementary protective layer seals the colouring layer and/or underlying additive, making the product clean and free-flowing also at the drying temperatures.

Possible sealing filmogen resins are selected from any resin in emulsion, solution or dispersion, with a melting point lower than the softening point and/or curing point of the polymer to be dyed and/or additivated. In particular, the sealing filmogen resins can be selected from acrylic, vinyl, styrene, polyester, ketone, versatic resins, and their copolymers.

The sequestering resin has a softening point higher than that of the dye and/or additives and lower than that of the polymer to be coloured and/or additivated. It is also in the form of a fine powder, with a particle-size of 5 to 50 microns, and generally equal to about 20 microns, and it acts as a sequestering agent of the dye and/or additives in excess which have not been well deposited on the surface of the polymer to be dyed, forming a further adhesion surface, thanks to the high specific surface. The partial softening thus allows the adhesion and distribution of the sealing resin to the surface of the polymer to be dyed and/or additivated so as to form a single homogeneous product. In particular, the sealing filmogen resins can be selected from linear polyethylene with a grade of 1 to 100, preferably from 1 to 80, more preferably from 5 to 40, or LLDPE and/or its copolymers with ethylvinylacetate.

More specifically, the effect is analogous to that which can be observed when powder is deposited on adhesive tape. The adhesive tape becomes saturated with powder which remains blocked on the tape. The product loses its tackiness.

The mixture consisting of the thermoplastic and/or thermosetting polymer to be dyed and/or additivated, the dye(s) and/or additive(s) and optionally the sealing filmogen resin and/or the sequestering resin, includes the following weight composition: thermoplastic and/or thermosetting polymer from 99.9% to 50% by weight with respect to the total weight of the mixture; dye(s) from 0 to 20% by weight with respect to the total weight of the mixture, additive(s) from 0 to 20% by weight with respect to the total weight of the mixture and sealing filmogen resin and/or sequestering resin from 0 to 20% by weight with respect to the total weight of the mixture.

Said mixture preferably comprises the following composition: thermoplastic and/or thermosetting polymer from 99.9% to 80% by weight with respect to the total weight of the mixture; dye(s) from 0 to 5% by weight with respect to the total weight of the mixture, additive(s) from 0 to 10% by weight with respect to the total weight of the mixture and sealing filmogen resin and/or sequestering resin from 0 to 5% by weight with respect to the total weight of the mixture.

In particular, the process according to the present invention can comprise a first phase for determining the colour or colour matching in which the intrinsic colour of the polymer to be dyed and/or additivated is measured, and, by comparison with a sample of the colour to be obtained, the exact qualitative and quantitative composition of the colours to be used for obtaining the desired colour is identified.

The thermoplastic and/or thermosetting polymer, in any physical form, granule, powder or flake, is then weighed and introduced into a mixer of the turbomixer type, having a suitable geometry.

The thermoplastic and/or thermosetting polymer is then heated to a temperature higher than the softening point of the dye and/or additive or mixture of dyes and/or additives, said temperature generally being lower than 100°C, by mechanical friction obtained by the high velocity of the blades of the turbomixer and/or microwave irradiation, possibly with an addition of water or other substances which absorb microwaves. The type of heating depends on the type of polymer.

During said heating phase, a forced vacuum can also be applied. This technique allows, if necessary, a complete drying of the polymer to be obtained in a few minutes, which is useful in the case of hygroscopic polymers, such as polyamides, polycarbonates, some styrene resins.

In particular, it has been verified that the application of heating + mechanical stress + vacuum is extremely efficient for a rapid and effective drying.

When the softening temperature of the dye and/or additive or mixture of dyes and/or additives has been reached, said mixture is added to the polymer to be dyed and/or additivated, which is maintained in high-speed rotational movement. The mixture of dyes and/or additives is then deposited on the surface of the polymer forming a "skin" having a greasy consistency, a thickness of a few microns and uniformly coloured in the desired colour and/or additivated, as the various components are well amalgamated with each other.

The mixture is then kept under light stirring until the complete formation of the film or surface layer, coadjuvating, if necessary, with the application of a forced vacuum inside the mixer.

A granule, flake or powder according to the present invention is subsequently obtained, by thermal deposition of said film or surface layer which has a thickness varying from a few microns to several millimetres, containing all the monocolour dyes and/or additives necessary for reaching the shade and characteristics required.

Said film or surface layer, consisting of a matrix having a low melting point and high viscosity, can then be fixed by the application of a suitable seal, forming a protection and fixing film which seals the dyes and/or additives inside and makes the product cleaner, more free-flowing, perfectly processable with common moulding and blowing plants.

The mixture of dyes and/or additives is preferably added to the thermoplastic and/or thermosetting polymer when this has reached the melting point of the dye, but it is also possible for all the components of the mixture and specifically the thermoplastic and/or thermosetting polymer, the dye(s), additive(s) and possibly the sealing filmogen resin and/or sequestering resin, to be weighed and mixed without heating. The temperature then rises as a result of the friction and, once the melting point of the dye has been reached, this begins to spread over the granules, subsequently when the melting point of the sealing filmogen resin and/or sequestering resin has been reached, this will also adhere to the surface layer of the dye and/or additive.

If necessary, in fact, depending on the quantity of dyes and/or additives added, a resin or mixture of sealing filmogen thermoplastic resins and/or sequestering resins in the form of a very fine powder, from 5 to 50 microns and normally equal to about 20 microns, or in an emulsion or aqueous dispersion or in a solvent, can be added. The protective film or layer can be produced according to two different methods: by melting the resin in powder form or by evaporation of the water or solvent and subsequent coalescence of the resin. A protective film or layer is formed, having a thickness of a few microns, which seals the dye and/or additive component, making the granule more free-flowing and not dirtiable;

in some cases an increase in the gloss of the granules is also observed. The protective film or layer consisting of the sealing filmogen resin and/or sequestering resin, is thus produced.

The granule, flake or powder, thus coloured and/or additivated, and optionally provided with a further protective layer, is then discharged, possibly cooled and packaged.

The process according to the present invention can therefore have an intermediate phase b1)-b3) between phase b) and phase c) which comprises:

b1) adding a pre-established quantity of sequestering resin in fine powder form and/or sealing filmogen resin in emulsion, aqueous dispersion or in solution; b2) effecting the complete evaporation of the water or solvent and coalescence of the sealing resin and/or distribution and melting or partial softening of the sequestering resin in powder form, further heating to a temperature ranging from the melting point of the sequestering resin and the melting point of the polymer to be dyed, mixing; b3) discharging the material thus obtained, possibly cooled, and packaging.

Phases a) and b) are carried out with rotational mixing, at a rate of 100 to 1,800 revs per minute, corresponding to a linear velocity of 2 to 37 m/s approximately, for a time ranging from 1 to 30 minutes.

Phases a) and b) are preferably carried out at a rate of 300 to 1,200 revs per minute, for a time ranging from 1 to 15 minutes.

The device for effecting the process includes a high-speed mixer, comprising a container and several mixing blades, a liquid ring pump, optionally a microwave emitter, a multi-nozzle sprayer, one or more dosage hoppers, a microprocessor system for controlling the process phases.

In particular, the high-speed mixer, of the vertical turbomixer type, with walls and bottom thermostat-regulated by means of a jacket, and thermostat-regulated blades. All the surfaces are mirror-polished.

The power installed is equal to 0.6 KW per Kg of capacity. The number of steps (i.e. the number of pairs of blades) varies from 2 to 6. In particular, their form is such as to guarantee an optimum circulation of the product, even at a low velocity, and a shear distribution which minimizes the contribution provided by the lower part of the mixer, i.e. by the interaction between the product, the lower blade and the bottom, the lower pair of blades being raised from the bottom by 5 to 50 mm, with supplementary teflon reels to prevent the formation of stagnation zones.

The liquid ring pump creates a forced vacuum inside the container, necessary for an effective drying, up to 0.05 bar.

The Magnetron microwave emitter, complete with wave guides and microprocessor controls, allows the production of a microwave field confined within the container, which heats the polymer thanks to the water inserted or adsorbed on the surface, or other substances already present in the polymer and/or inserted before the mixing. These substances are characterized by being easily dispersible and having a high microwave absorption coefficient.

The sprayers and dosage hoppers allow the insertion of liquids and solids in the various process phases, the whole system driven by a control unit by means of a microprocessor. Alternatively, one or more sprayers can act as air blowers which, together with the liquid ring pump, allow the removal of the condensate and polymer powder possibly formed by friction during the heating phase.

The main advantage of the process according to the present invention consists in the fact that said process can be used for the colouring and/or additive addition of many thermoplastic and/or thermosetting polymers, with a considerable saving in terms of energy and time, as well as machinery suitable for all polymers and at a low cost, with a high productivity, but extremely competitive in the production of small lots, as there are no processing drops.

This process also allows the optical-mechanical characteristics of the polymer to be maintained as it does not melt or subject the polymer to thermomechanical stress.

The polymer in the form of granules, flakes or powder, is heated in a few minutes to a temperature ranging from 70 to 150°C, by high-speed friction inside a turbomixer having a suitable geometry.

In particular, a blade profile has been studied, which is suitable for maintaining an optimum heat transfer by friction and a high circulation of material also with a low number of revs, distributing the shear component so as to cause the heating of the mixture without jeopardizing the surface layers of the granule, minimizing the contribution provided by the lower part of the mixer, i.e. by the interaction between the product, the lower blade and the bottom, producing, as already specified, a device in which the lower pair of blades is raised from the bottom by 5 to 50 mm, with supplementary teflon reels, to prevent the formation of stagnation areas.

Furthermore, as a result of the particular geometry of the container and blades, the device does not require any particular cleaning between one colour change and another, becoming self-cleaning.

In the device, the blades have been modified in two ways:

a) the ends of the lower blade have two protuberances with a marked angle: these parts allow there to be a greater thrust of the product upwards, favouring the circulation of the product.

b) In traditional turbomixers, the shear is extremely important, i.e. the capacity of breaking clots of material, of inorganic fillers and/or dyes, such as pure titanium dioxide, where the shear is defined as follows:

```
shear = blade rate/distance of the blade
from the bottom.
```

It is evident that the lesser the distance from the bottom, the greater the shear will be. In traditional turbomixers the lower blade is positioned at a distance which varies from 2 to 10 mm from the bottom, specifically to crush any type of agglomerate.

In the device, a configuration of the blades such as that used in traditional turbomixers, produces two undesired effects: the first undesired effect is the production of a large amount of powder, by the grinding of the product, especially if in granular form, the second is the destruction of the layer of colour and protective layer of resin which is possibly introduced to seal the colour. The high shear creates a delaminating effect on the film of the coating of both the colour and protective layer, causing the coating to become detached and form small agglomerates of about 0.5 mm, detached from the polymer to be dyed and/or additivated.

In the device, the lower blade is positioned at a distance of 5 to 50 mm from the bottom, a distance which varies depending on the dimensions of the granule, inserting one or more pins or reels and/or flaps, also made of teflon, to maintain the mixing of the product on the bottom which would otherwise tend to pile up. Various upper blade steps are then added to compensate the loss of heat transfer.

This configuration consequently allows the heat to be transferred to the polymer by friction of the blades on the granule and by friction between granule and granule, minimizing the shear contribution of the bottom which would tend to destroy the layers of dye and/or additive and possibly the sealing and/or sequestering resin.

Contemporaneously or alternatively, if necessary, the heating is activated with the help, or preferentially, of microwave irradiation. In this way, it is possible to exploit the water adsorbed in the polymer, or added in small quantities on the surface, or other microwave-absorbing substances, to rapidly heat the polymer. The contemporaneous mixing guarantees an optimum heat distribution.

The application of a forced vacuum during or at the end of the heating phase allows an excellent drying of the polymer, in a few minutes.

In particular a depression is applied which varies from 0 to -0.95 bar.

It has been observed that heating by high-speed friction, contemporaneously with the application of a forced vacuum, is extremely effective. The impact of the blades on each single granule, in fact, tends to push the water towards the outside, where a very low vapour pressure causes it to rapidly evaporate also at temperatures much lower than 100°C.

Once the softening temperature of the mixture of dye and/or additives has been reached, preferably but not exclusively consisting of dyes and/or additives predispersed in mixtures of waxes or esters of fatty acids, said mixture is inserted inside the mixer, where, due to friction, it is distributed in a few minutes, "spread", over the surface of each single granule, flake or powder particle, completely covering it; the single dyeing components and/or additives, moreover, are closely mixed, giving the granule a uniformly coloured appearance in the desired colour and/or uniformly additivated.

The granules, flakes or single powder particles of thermoplastic and/or thermosetting polymer are thus coated by a film or layer of dye and/or additive which forms a "skin" around each single element.

The mixture obtained is therefore uniformly coloured and/or additivated. In some cases however, when high quantities of dye and/or additive are used, the mixture may not be free-flowing with heat and/or release dye, particularly in pneumatic transportations.

In this case, a protection film of sealing filmogen resin and/or sequestering resin is deposited on the surface of the granule or flake or powder, finely distributed on the surface of the resin to be coloured, said resin preferably being compatible with the polymer in the percentages of use or of the same polymeric nature as the coloured and/or additivated polymer.

If the resin is $LLD_{PE}$, for example, it is compatible with nylon up to a max of 1%. In higher percentages it tends to separate and create problems (it is therefore possible to use about 0.4% of LLDPE with respect to nylon, i.e. a percentage which is compatible).

The sequestering resins used for obtaining the protection layer can be suitably selected from polyolefins, low density polyolefins, preferably LLDPE (linear low density polyethylene), or its copolymers with ethylvinylacetate, or other polyaddition and polycondensation polymers. Aqueous dispersions of acrylic, vinyl, ketone, styrene, polyester, ketone, versatic resins, and in general any filmogen resin compatible with the polymer, can be used as sealing filmogen resin.

According to a first alternative, the protective film or layer is obtained by introducing the sequestering resin into the mixer in the form of a very fine powder, from 5 to 50 microns and normally equal to approximately 20 microns, at a temperature immediately preceding the melting point of the resin itself; the resin is uniformly distributed thanks to its particle-size covering each single granule, flake, particle of coloured and/or additivated polymer, being partly mixed with the surface layer of dye and/or additive.

Continuing the mixing, the increase in temperature beyond the melting point of the sequestering resin in powder form, normally ranging from 100 to 130°C and in any case much lower than the melting point of the polymer to be coloured and/or additivated, causes the melting of the powder which thus covers each single granule; the stirring of the whole mixture and particular geometry of the apparatus prevent the formation of agglomerates.

A protective film or layer is thus formed, which can also have an extremely irregular appearance, similar to a polymer lattice", or with a leopard-spot structure, which, however, blocks the colouring and/or additive substance on the surface of the granule.

The subsequent possible addition of antiblocking products, such as micronized silica, gives the product a greater processability and flow.

At this point, depending on the concentration of dye and/or additive, the product can be directly packaged or it is discharged into a cooler under stirring, where the temperature is abated to below the melting point of the colouring and/or additive substances.

The product according to the present invention can be packaged in aluminum bags to remain free of humidity and therefore ready for use, or packaged in polyethylene or paper bags; in this case it can be subsequently re-dried, if necessary, in relation to the degree of humidity reached during storage.

Alternatively, the protective film or layer can be obtained by direct spray application of a sealing filmogen resin dispersed in water or other solvent, which, by evaporation of the latter, forms a film which completely covers each single granule, sealing the film of dye and/or additive. The temperature of the granule, as also the application of the vacuum, favour the formation of the film in a few minutes, for a process called "coalescence".

Antiblocking products, such as silica, are then possibly added to the product which is then discharged and packaged.

The final result is a granule, flake, or powder, uniformly coloured and/or additivated, by the application of a film of dye and/or additive, said film of dye and/or additive being possibly sealed by a second film or protective layer, which gives fluidity, anti-adherence and particular aesthetical properties (gloss) to the granule, flake or powder, making it at first sight undistinguishable from an extruded product.

If the granule is cut, it can be verified that its interior is neutral, i.e. composed of the non-coloured and/or additivated polymer.

In a subsequent phase, the granule, flake or powder according to the present invention is then injection moulded, or rotomoulded, or extruded into the desired form.

In this moulding phase, the product undergoes a melting and mixing which, as a result of the already optimum surface distribution of the dye and/or additives, is sufficient to give an end-product having the desired colour, without any defects or imperfections.

The characteristics and advantages of the present invention will appear more evident from the following detailed and illustrative description, referring to the following examples.

Example 1

Example 1 is an applicative example of the process phases described above.

In particular, the colouring was effected of a certain quantity of ABS (Acrylonitrile-butadienestyrene) granules, as thermoplastic polymer, according to a blue-coloured test-sample. The exact quantities of polymer and dye, and precisely 98 kg of ABS and 2 kg of dye mixture, were prepared and weighed. The total mixture therefore consists of 98% by weight of ABS and 2% by weight of dye mixture, so as to reproduce the exact colour shade desired.

The ABS granules were then inserted in the mixer; the mixer was switched on and the velocity established at such a value as to allow the maximum energy absorption possible, i.e. at about 0.5 KW/Kg. The rotation rate depends on the dimensions of the mixer, normally the peripheral linear rate of the blades is 20 m/s.

The walls, bottom, lid and blades were thermostat-regulated by means of a suitable circuit at 90°C. As a coloured ready-to-use granule was desired and as ABS is a hygroscopic polymer, a vacuum of -0.8 bar was applied. The polymer reached a temperature of 80°C in about 5 minutes.

The contemporaneous application of a vacuum and heating by friction allowed the complete extraction of the water. The percentage of absorbed water therefore passed from 0.3% to a value of 0.0% revealed by means of the thermogravimetric method ASTM D6980-04 ("Test method for determination of moisture in plastics by loss in weight"). The water was extracted from the vacuum pump, as it was not able to condense inside the apparatus.

Once a temperature of 80°C had been reached, the dye mixture was introduced into the mixer: the mixture was thus melted and uniformly distributed on the surface of the ABS granules; furthermore, as a result of the high affinity of the dye mixture with the polymer to be coloured and mirror treatment of the mixer, no deposits of dye were observed on the walls of the latter.

The mixture was left under heating for a further 3 minutes until a temperature of 100°C was reached; a quantity equal to 0.4 kg of LLDPE powder was then added, which was uniformly distributed on the surface of granules already provided with the blue-coloured surface layer; the velocity was then reduced to half: as a result of the further friction, the temperature rose to 110°C. The LLDPE powder consequently melted, creating an irregular coating layer which protects the skin of dye, which is more uniformly distributed thanks to its "fatty" nature. The product was then discharged, cooled and subsequently packaged.

Example 2

In example 2, a flake of used ground polycarbonate, with a transparent red colour, was dyed.

The exact quantity of polymer and dye, and precisely 99.8 kg of used PC and 0.2 kg of dye mixture, were prepared and weighed. The total mixture therefore consists of 99.8% by weight of used PC and 0.2% by weight of dye mixture, so as to reproduce the exact colour shade desired.

The PC flakes were then inserted in the mixer; the mixer was switched on and the velocity established at such a value as to allow the maximum energy absorption possible, i.e. at about 0.5 KW/Kg. The rotation rate depends on the dimensions of the mixer, normally the peripheral linear rate of the blades is 20 m/s.

The walls, bottom, lid and blades were thermostat-regulated by means of a suitable circuit at 90°C. As a coloured ready-to-use granule was desired and as PC is a hygroscopic polymer, a vacuum of -0.8 bar was applied. The polymer reached a temperature of 120°C in about 8 minutes.

The contemporaneous application of a vacuum and heating by friction allowed the complete extraction of the water. The percentage of absorbed water therefore passed from 0.3% to a value of 0.0% revealed by means of the thermogravimetric method ASTM D6980-04 ("Test method for determination of moisture in plastics by loss in weight"). The water was extracted from the vacuum pump, as it was not able to condense inside the apparatus.

Once a temperature of 120°C had been reached, the dye mixture was introduced into the mixer: the mixture was thus melted and uniformly distributed on the surface of the flake; furthermore, as a result of the high affinity of the dye mixture with the polymer to be coloured and mirror treatment of the mixer, no deposits of dye were observed on the walls of the latter. The particular surface roughness of the ground flake, moreover, allowed a better colour hold: the surface colouring of the flake was less uniform but the colour hold on the surface was firmer. The mixing was continued for about 1 minute. The product was then discharged, cooled and subsequently packaged.

In this case, due to the roughness of the support and also the modest quantity of dye added, it was not necessary to apply a protective layer of resin. The product proves to be clean and free-flowing only with thermofixing.

Further advantages and characteristics of the present invention will also appear more evident from the following illustrative and non-limiting description which refers to the enclosed figures, in which:

- figure 1 shows a schematic representation of a mixer in one of its possible embodiments; the blades of the mixer of the device are also represented in one of their possible embodiments;

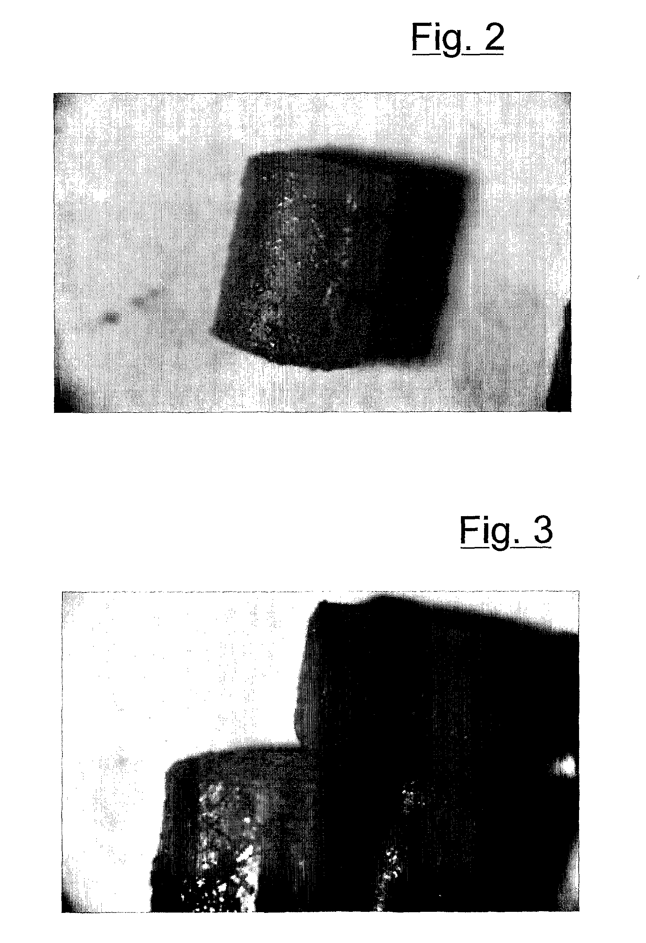

- figure 2 is a photograph of a granule according to the present invention in a sectional view in a first embodiment which also includes the protective layer of sequestering resin;
- figure 3 is a photograph of a different view of the granule according to the present invention of figure 2 ;

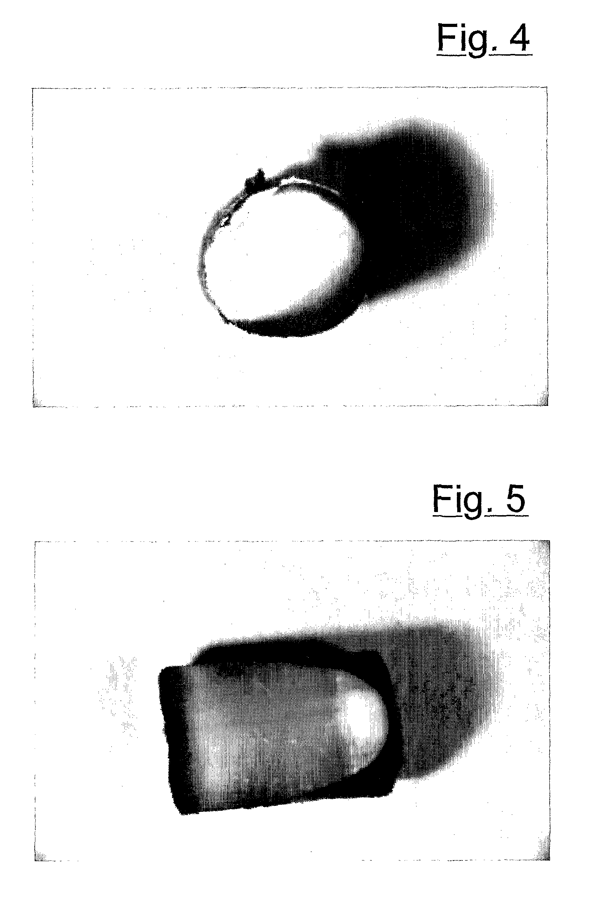

- figure 4 is a photograph of a granule according to the present invention, in a sectional view, in a second embodiment which envisages the surface layer of dye only;
- figure 5 is a photograph of a different view of the granule according to the present invention of figure 4.

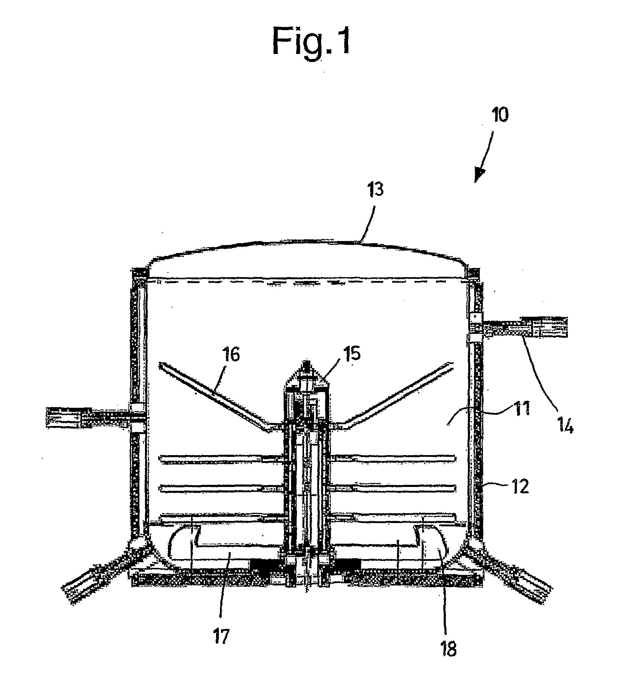

With reference to figure 1, 10 indicates the device which comprises a tank (11) of the mixer (12), the lid (13), the side nozzles (14), a driving shaft (15) carrying the blades (16). In particular, the ends of the blades of the lower pair, indicated with (17), have two protuberances (18). The blades of the upper pair (16) also have an angulation to favour the mixing, said angulation however is not indispensable even if it provides better results in the mixing.

**Claims**

1. A granule, flake or powder of a thermoplastic and/or thermosetting polymer, coloured and/or containing additives, consisting of a nucleus of neutral thermoplastic and/or thermosetting polymer and a surface layer of colouring agent and/or additive, wherein the colouring agents are dispersed on a low-melting matrix, with a high viscosity, having a melting point ranging from 50 to 150°C, and in any case lower than the melting point of the thermoplastic and/or thermosetting polymer to be dyed and/or additivated **characterized in that** said granule, flake or powder also envisaging a further protective layer applied externally to the layer of colouring agent and/or additive, said protective layer consisting of a sequestering resin and/or a sealing filmogen resin, wherein the sealing filmogen resin is selected from any resin with a melting point lower than the softening point and/or curing point of the polymer to be dyed and/or additivated.

2. The granule according to claim 1, **characterized in that** it consists of a nucleus of neutral thermoplastic and/or thermosetting polymer, said nucleus having a surface layer of colouring agent and/or low-melting additive distributed uniformly on the outer surface of the nucleus itself.

3. The granule according to claim 1, **characterized in that** the thermoplastic polymer is selected from high and low density polyethylene (HDPE and LDPE), linear polyethylene (LLDPE), polyacrylonitrile-butadiene- styrene (ABS), polypropylene (PP) and its copolymers, polymethylmethacrylate (PMMA) and its copolymers, polyethyleneterephthalate (PET) and its copolymers, polybutyleneterephthalate (PBT) and its copolymers, polycarbonate (PC) and its copolymers, crystal and high impact polystyrene (GPPS and HIPS), poly-styreneacrylonitrile (SAN), elastomers and thermoplastic rubbers based on styrene (SB-SBS-SEBS), polyethylvinylacetate (EVA), polyvinylchloride (PVC) and plasticized polyvinylchloride, acetal resins and their copolymers, polyamides /(PA 6, 6.6, 6.10, 6.11, 6.12), polysulfones, polyphenylene oxide (PPO), polyphenylene-ether (PPE), olefinic elastomers (EPR, EPDM), cellulose acetate, thermoplastic polyurethane (TPU), also filled with mineral fillers and glass fibres/balls, and/or blends thereof, other polymers deriving from polycondensation and polyaddition.

4. The granule according to claim 1, **characterized in that** the colouring agents are pigments or soluble dyes, in outer powder form, having a particle-size ranging from 50 to 1,500 microns, preferably equal to about 300 microns.

5. The granule according to claim 1, **characterized in that** the low-melting matrix consists of mixtures of fatty acids.

6. The granule according to claim 1, **characterized in that** the additives or chemical modifiers are selected from UV stabilizers, optical bleaching agents, thermostabilizers, antioxidants, flame-retardant additives, grafting agents, fluidity modifiers, antistatic agents, plasticizers, oiling agents, mineral fillers, gloss modifiers, mould detachers, reflection modifiers, namely glitters or coloured fibres, as such or dispersed on the low-melting matrix.

7. The granule according to claim 1, **characterized in that** the sealing filmogen resin is selected from acrylic, vinyl, styrene, polyester, ketone, versatic resins, and their copolymers, in emulsion, solution or dispersion and the sequestering resin is selected from polyolefins, preferably LLDPE (linear low density polyethylene) with a grade of 1 to 100, preferably from 1 to 80, more preferably from 5 to 40, or LLDPE and/or its copolymers with ethylvinylacetate.

8. The granule according to claim 1, **characterized in that** the sequestering resin is in the form of a fine powder, with a particle-size ranging from 5 to 50 microns and normally equal to approximately 20 microns, and it has a softening point higher than that of the colouring agent dye and/or additives and lower than the softening point and/or curing point of the polymer to be dyed and/or additivated.

9. The granule according to claim 1, **characterized in that** the mixture consisting of the thermoplastic and/or thermosetting polymer to be dyed and/or additivated, the colouring agent(s) and/or additive (s) and the sealing filmogen resin and/or the sequestering resin, envisages the following weight composition: thermoplastic and/or thermosetting polymer from 99.9% to 50% by weight with respect to the total weight of the mixture; colouring agent(s) from 0 to 20% by weight with respect to the total weight of the mixture, additive (s) from 0 to 20% by weight with respect to the total weight of the mixture and sealing filmogen resin and/or sequestering resin from 0 to 20% by weight with respect to the total weight of the mixture.

10. A process for the preparation of a granule, flake or powder of a thermoplastic and/or thermosetting polymer, coloured and/or containing additives, according to any of the claims from 1 to 9, wherein it comprises the following passages:

a) the granule, flake or powder of polymer to be dyed and/or additivated is placed in a high-speed mixer and heated to the melting temperature of the colouring agent(s) and/or additive (s), pre-dispersed in mixtures of waxes or esters of fatty acids;
b) the colouring agent(s) and/or additive (s), pre-dispersed in mixtures of waxes or esters of fatty acids, are added to the mixer and the system mixed at a high speed, maintaining the system at the temperature reached in phase a), and
c) the granule, flake or powder of thermoplastic and/or thermosetting polymer, coloured and/or containing additives is discharged,

**characterised in that** the process envisages an intermediate phase of deposition of a protection film of sealing filmogen resin and/or sequestering resin between phase b) and phase c).

11. The process according to claim 10, **characterized in that** the melting point of the mixture of colouring agents and/or additives is normally lower than 100°C, and in any case always below the melting point or softening point of the polymer, and in the case of a thermosetting polymer, below the curing temperature of the polymer.

12. The process according to claim 10, **characterized in that** phases a) and b) are carried out with rotational mixing, at a rate of 100 to 1,800 rpm, corresponding to a linear rate of 2 to 37 m/s approximately, for a time ranging from 1 to 30 minutes.

13. The process according to claim 10, **characterized in that** the intermediate phase envisages phases b1)-b3) between phase b) and phase c) which comprises:

   b1) adding a pre-established quantity of sequestering resin in fine powder form and/or sealing filmogen resin in emulsion, aqueous dispersion or in solution;
   b2) effecting the complete evaporation of the water or solvent and coalescence of the sealing resin and/or distribution and melting or partial softening of the sequestering resin in powder form, further heating to a temperature ranging from the melting point of the sequestering resin and the melting point of the polymer to be dyed, mixing;
   b3) discharging the material thus obtained, possibly cooled, and packaging.

14. The process according to claim 10, **characterized in that** phase a) is preceded by a phase for determining the colour or colour matching in which the intrinsic colour of the polymer to be dyed and/or additivated is measured, and, by comparison with a sample of the colour to be obtained, the exact qualitative and quantitative composition of the colours to be used for obtaining the desired colour is identified.

15. The process according to claim 10, **characterized in that** the heating to a temperature higher than the softening point of the colouring agent and/or additive or mixture of colouring agents and/or additives is effected by mechanical friction or by the suitable addition of water or other substance which absorbs the microwaves and microwave irradiation.

16. The process according to claim 10, **characterized in that** a forced vacuum is applied during the heating in phase a).

17. The process according to claim 10, **characterized in that** mixture of colouring agent and/or additive is deposited on the surface of the polymer to be dyed and/or additivated forming a "skin" having a greasy consistency, a thickness of a few microns and uniformly coloured in the desired colour.

**Patentansprüche**

1. Granulat, Flocken oder Pulver eines thermoplastischen und/oder duroplastischen, gefärbten und/oder additivierten Polymers, bestehend aus einem Kern aus neutralem, thermoplastischem und/oder duroplastischem Polymer und einer Schale aus Farbstoffen und/oder Zusatzstoffen, wobei die Farbstoffe dispergiert sind auf einer niederschmelzenden, hochviskösen Matrix mit einem Schmelzpunkt zwischen 50°C und 150°C, jedenfalls niedriger als der Schmelzpunkt des zu färbenden und/oder additivierenden, thermoplastischen und/oder duroplastischen Polymers, **dadurch gekennzeichnet, dass** für das Granulat, die Flocken oder das Pulver eine weitere Schutzschicht vorgesehen ist, die außen auf der Farbstoff- und/oder Zusatzstoffschale aufgebracht wird, wobei die Schutzschicht aus einem komplexbildenden Harz und/oder einem abdichtenden, filmbildenden Harz besteht, wobei das abdichtende, filmbildende Harz aus einem beliebigen Harz ausgewählt ist, dessen Schmelzpunkt niedriger als der Erweichungspunkt und/oder der Härtepunkt des zu färbenden und/oder additivierenden Polymers ist.

2. Granulat nach Anspruch 1, **dadurch gekennzeichnet, dass** es aus einem Kern aus neutralem, thermoplastischem und/oder duroplastischem Polymer besteht, wobei der Kern eine Schale aus Farbstoffen und/oder niederschmelzenden Zusatzstoffen aufweist, die gleichmäßig auf der Außenfläche des Kerns verteilt sind.

3. Granulat nach Anspruch 1, **dadurch gekennzeichnet, dass** das thermoplastische Polymer ausgewählt ist aus hochdichtem und niederdichtem Polyethylen (HDPE und LDPE), linearem Polyethylen (LLDPE), Polyacrylnitrilbutadienstyrol (ABS), Polypropylen (PP) und dessen Copolymeren, Polymethylmethacrylat (PMMA) und dessen Copolymeren, Polyethyleneterephthalat (PET) und dessen Copolymeren, Polybutylenterephthalat (PBT) und dessen Copolymeren, Polycarbonat (PC) und dessen Copolymeren, glasklarem und hochschlagfestem Polystyrol (GPPS und HIPS), Polystyrol-Acrylnitril (SAN), Elastomeren und thermoplastischen Kautschuken auf Styrolbasis (SB-SBS-SEBS), Polyethylvinylacetat (EVA), Polyvinylchlorid (PVC) und weichmacherhaltigen Polyvinylchloriden, Acetalharzen und deren Copolymeren, Polyamiden /(PA 6, 6.6, 6.10, 6.11, 6.12), Polysulfonen, Polyphenylenoxid (PPO), Polyphenylenether (PPE), olefinhaltigen Elastomeren (EPR, EPDM), Celluloseacetat, thermoplastischen Polyurethanen (TPU), auch mit Mineralfüllstoffen und Glasfasern/-kügelchen und/oder Gemischen hiervon gefüllt, sowie sonstigen mittels Polykondensation und Polyaddition gewonnenen Polymeren.

4. Granulat nach Anspruch 1, **dadurch gekennzeichnet, dass** die Farbstoffe Pigmente oder lösliche Farben in äußerer Pulverform sind, mit einer Partikelgröße zwischen 50 und 1.500 Mikrometer, bevorzugt ca. 300 Mikrometer.

5. Granulat nach Anspruch 1, **dadurch gekennzeichnet, dass** die niederschmelzende Matrix aus einem Gemisch aus Fettsäuren besteht.

6. Granulat nach Anspruch 1, **dadurch gekennzeichnet, dass** die Zusatzstoffe oder chemischen Modifikatoren ausgewählt sind aus UV-Stabilisatoren, optischen Bleichmitteln, Thermostabilisatoren, Antioxidationsmitteln, flammhemmenden Zusatzstoffen, Pfropfmitteln, Fluiditätsmodifikatoren, Antistatika, Weichmachern, Ölungsmitteln, mineralischen Füllstoffen, Glanzmodifikatoren, Entformungsmitteln, Reflexionsmodifikatoren, insbesondere Glitter oder farbige Fasern als solche oder dispergiert in der niederschmelzenden Matrix.

7. Granulat nach Anspruch 1, **dadurch gekennzeichnet, dass** das abdichtende, filmbildende Harz ausgewählt ist aus Acryl, Vinyl, Styrol, Polyester, Keton, Harzen auf Versatic-Säurebasis und deren Copolymern als Emulsion, Lösung oder Dispersion, und das komplexbildende Harz ausgewählt ist aus Polyolefinen, bevorzugt LLDPE (lineares niederdichtes Polyethylen) mit einem Wert von 1 bis 100, bevorzugt von 1 bis 80, mehr bevorzugt von 5 bis 40, oder LLDPE und/oder dessen Copolymeren mit Ethylvinylacetat.

8. Granulat nach Anspruch 1, **dadurch gekennzeichnet, dass** das komplexbildende Harz in Form eines feinen Pulvers mit einer Partikelgröße zwischen 5 und 50 Mikrometer, normalerweise ca. 20 Mikrometer, vorliegt und einen Erweichungspunkt aufweist, der über dem des Farbstoffes und/oder der Zusatzstoffe, aber unter dem Erweichungspunkt und/oder dem Härtepunkt des zu färbenden und/oder additivierenden Polymers liegt.

9. Granulat nach Anspruch 1, **dadurch gekennzeichnet, dass** für das Gemisch, bestehend aus dem zu färbenden und/oder additivierenden thermoplastischen und/oder duroplastischen Polymer, dem/den Farbstoff (en) und/oder Zusatzstoff(en) und dem abdichtenden, filmbildenden Harz und/oder dem komplexbildenden Harz, folgende Gewichtszusammensetzung vorgesehen ist: thermoplastisches und/oder duroplastisches Polymer zwischen 99,9% und 50 Gew.-% bezogen auf das Gesamtgewicht des Gemisches; Farbstoff (e) zwischen 0 und 20 Gew.-% bezogen auf das Gesamtgewicht des Gemisches; Zusatzstoff(e) zwischen 0 und 20 Gew.-% bezogen auf das Gesamtgewicht des Gemisches und abdichtende, filmbildende Harze und/oder komplexbildende Harze zwischen 0 und 20 Gew.-% bezogen auf das Gesamtgewicht des Gemisches.

10. Verfahren zur Herstellung von Granulat, Flocken oder Pulver eines thermoplastischen und/oder duroplastischen, gefärbten und/oder Zusatzstoffe enthaltenden Polymers nach einem beliebigen der Ansprüche 1 bis 9, umfassend folgende Schritte:

a) das Granulat, die Flocken oder das Pulver des zu färbenden und/oder additivierenden Polymers wird in einen Hochgeschwindigkeitsmischer gegeben und bis zur Schmelztemperatur des/der Farbstoffs(e) und/oder des/der Zusatzstoff(e) erhitzt und in Gemischen aus Wachsen oder Fettsäureestern vordispergiert;
b) der/die Farbstoff(e) und/oder Zusatzstoff(e), die in Gemischen aus Wachsen oder Fettsäurestern vordispergiert sind, werden in den Mischer hinzugefügt und das Ganze wird bei hoher Geschwindigkeit gemischt, wobei die in Phase a) erreichte Temperatur aufrecht erhalten wird, und
c) das Granulat, die Flocken oder das Pulver des thermoplastischen und/oder duroplastischen, gefärbten und/oder Zusatzstoffe enthaltenden Polymers wird ausgelassen,

**dadurch gekennzeichnet, dass** das Verfahren eine Zwischenphase zum Ablagern eines Schutzfilms aus filmbildendem Harz und/oder komplexbildendem Harz zwischen den Phasen b) und c) vorsieht.

**11.** Verfahren nach Anspruch 10, **dadurch gekennzeichnet, dass** der Schmelzpunkt des Gemisches aus Farbstoffen und/oder Zusatzstoffen normalerweise unter 100°C, aber jedenfalls unter dem Schmelzpunkt oder Erweichungspunkt des Polymers und bei einem duroplastischen Polymer unter der Härtetemperatur des Polymers liegt.

**12.** Verfahren nach Anspruch 10, **dadurch gekennzeichnet, dass** die Phasen a) und b) mittels Rotationsmischen bei einer Geschwindigkeit zwischen 100 und 1.800 U/min, entsprechend einer linearen Geschwindigkeit zwischen ca. 2 und 37 m/s über einen Zeitraum zwischen 1 und 30 Minuten ausgeführt werden.

**13.** Verfahren nach Anspruch 10, **dadurch gekennzeichnet, dass** die Zwischenphase die Phasen b1)-b3) zwischen den Phasen b) und c) vorsieht, umfassend:

b1) Hinzufügen einer vorab festgelegten Menge an komplexbildendem Harz in feiner Pulverform und/oder filmbildendem Harz in Form von Emulsion, wässriger Dispersion oder Lösung;
b2) Ausführen der vollständigen Verdunstung des Wassers oder Lösungsmittels und der Koaleszenz des abdichtenden Harzes und/oder Verteilen und Schmelzen oder teilweises Erweichen des komplexbildenden Harzes in Pulverform, ferner Erhitzen auf eine Temperatur im Bereich zwischen dem Schmelzpunkt des komplexbildenden Harzes und dem Schmelzpunkt des zu färbenden Polymers, Mischen;
b3) Auslassen des so erhaltenen, möglichst abgekühlten Materials und Verpacken.

**14.** Verfahren nach Anspruch 10, **dadurch gekennzeichnet, dass** der Phase a) eine Phase zum Festlegen oder Anpassen der Farbe vorangestellt ist, in der die Eigenfarbe des zu färbenden und/oder additivierenden Polymers gemessen und durch Vergleich mit einem Muster der gewünschten Farbe die genaue quantitative und qualitative Zusammensetzung der Farben bestimmt wird, die zur Erzielung der gewünschten Farbe verwendet werden müssen.

**15.** Verfahren nach Anspruch 10, **dadurch gekennzeichnet, dass** das Erhitzen auf eine Temperatur, die über dem Erweichungspunkt des Farbstoffes und/oder des Zusatzstoffes oder des Gemisches aus Farbstoffen und/oder Zusatzstoffen liegt, durch mechanische Reibung oder durch entsprechendes Hinzugeben von Wasser oder eines anderen Stoffes vorgenommen wird, der die Mikrowellen und Mikrowellenstrahlung absorbiert.

**16.** Verfahren nach Anspruch 10, **dadurch gekennzeichnet, dass** während des Erhitzens in Phase a) ein erzwungener Unterdruck beaufschlagt wird.

**17.** Verfahren nach Anspruch 10, **dadurch gekennzeichnet, dass** das Gemisch aus Farbstoffen und/oder Zusatzstoffen auf der Oberfläche des zu färbenden und/oder additivierenden Polymers aufgebracht wird, wobei es eine Schale mit fettiger Konsistenz und einer Dicke von wenigen Mikrometern bildet, die gleichmäßig in der gewünschten Farbe eingefärbt ist.

**Revendications**

**1.** Granulé, paillette ou poudre d'un polymère thermoplastique et/ou thermodurcissable, coloré et/ou contenant des additifs, consistant en un noyau de polymère thermoplastique et/ou thermodurcissable neutre et une couche superficielle d'agent colorant et/ou d'additif, dans lequel les agents colorants sont dispersés sur une matrice à bas point de fusion, avec une viscosité élevée, ayant un point de fusion compris dans la plage de 50 à 150°C, et dans tous les cas inférieur au point de fusion du polymère thermoplastique et/ou thermodurcissable à colorer et/ou à combiner avec des additifs, **caractérisé en ce que** ledit granulé, ladite paillette ou ladite poudre prévoit également une autre couche protectrice appliquée à l'extérieur de la couche d'agent colorant et/ou de l'additif, ladite couche protectrice consistant en une résine séquestrante et/ou une résine filmogène de scellement, dans lequel la résine filmogène de scellement est sélectionnée parmi n'importe quelle résine avec un point de fusion inférieur au point de ramollissement et/ou au point de durcissement du polymère à colorer et/ou à combiner avec des additifs.

**2.** Granulé selon la revendication 1, **caractérisé en ce qu'**il consiste en un noyau de polymère thermoplastique et/ou thermodurcissable neutre, ledit noyau ayant une couche superficielle d'agent colorant et/ou d'additif à bas point de fusion distribué uniformément sur la surface extérieure du noyau lui-même.

**3.** Granulé selon la revendication 1, **caractérisé en ce que** le polymère thermoplastique est sélectionné parmi polyéthylène haute et basse densité (HDPE et LDPE), polyéthylène linéaire (LLDPE), poly-acrylonitrile-butadiène-styrène (ABS), polypropylène (PP) et ses copolymères, polyméthacrylate de méthyle (PMMA) et ses copolymères, polyéthylène téréphtalate (PET) et ses copolymères, polybutylène téréphtalate (PBT) et ses copolymères, polycarbonate (PC) et ses copolymères, polystyrène cristal et à haute résistance aux chocs (GPPS et HIPS), poly-styrène-acrylonitrile (SAN), élastomères et caoutchoucs thermoplastiques à base de styrène (SB-SBS-SEBS), poly-éthyle-vinyle-acétate (EVA), polychlorure de vinyle (PVC) et polychlorure de vinyle plastifié, résines acétal et leurs copolymères, polyamides /(PA 6, 6.6, 6.10, 6.11, 6.12), polysulfones, oxyde de polyphénylène (PPO), éther de polyphénylène (PPE), élastomères oléfiniques (EPR, EPDM), acétate de cellulose, polyuréthane thermoplastique (TPU), également chargés avec des charges minérales et des fibres/billes de verre, et/ou des mélanges de ceux-ci, d'autres polymères dérivant de la polycondensation et de la polyaddition.

4. Granulé selon la revendication 1, **caractérisé en ce que** les agents colorants sont des pigments ou des colorants solubles, sous forme extérieure de poudre, ayant une grosseur de particule comprise dans la plage de 50 à 1500 microns, de préférence égale à environ 300 microns.

5. Granulé selon la revendication 1, **caractérisé en ce que** la matrice à bas point de fusion comprend des mélanges d'acides gras.

6. Granulé selon la revendication 1, **caractérisé en ce que** les additifs ou modificateurs chimiques sont sélectionnés parmi des stabilisants aux UV, des agents de blanchiment optiques, des stabilisants thermiques, des antioxydants, des additifs retardateurs de flamme, des agents de greffage, des modificateurs de fluidité, des agents antistatiques, des plastifiants, des agents de graissage, des charges minérales, des modificateurs de brillance, des agents de démoulage, des modificateurs de réflexion, à savoir des scintillants ou fibres colorées, tels quels ou dispersés sur la matrice à bas point de fusion.

7. Granulé selon la revendication 1, **caractérisé en ce que** la résine filmogène de scellement est sélectionnée parmi acrylique, vinyle, styrène, polyester, cétone, résines à base d'acides Versatic et leurs copolymères, en émulsion, solution ou dispersion et la résine séquestrante est sélectionnée parmi des polyoléfines, de préférence LLDPE (polyéthylène basse densité linéaire) avec une qualité de 1 à 100, de préférence de 1 à 80, de manière davantage préférée de 5 à 40, ou LLDPE et/ou ses copolymères avec éthyle-vinyle-acétate.

8. Granulé selon la revendication 1, **caractérisé en ce que** la résine séquestrante est sous la forme d'une poudre fine, avec une grosseur de particule comprise dans la plage de 5 à 50 microns et normalement égale à environ 20 microns, et elle a un point de ramollissement supérieur à celui de la teinture d'agents colorants et/ou des additifs et inférieur au point de ramollissement et/ou au point de durcissement du polymère à colorer et/ou à combiner avec des additifs.

9. Granulé selon la revendication 1, **caractérisé en ce que** le mélange comprenant le polymère thermoplastique et/ou thermodurcissable à colorer et/ou à combiner avec des additifs, l'agent ou les agents colorants et/ou l'additif ou les additifs et la résine filmogène de scellement et/ou la résine séquestrante, prévoit la composition pondérale suivante : polymère thermoplastique et/ou thermodurcissable de 99,9% à 50% en poids par rapport au poids total du mélange ; agent ou agents colorants de 0 à 20% en poids par rapport au poids total du mélange, additif ou additifs de 0 à 20% en poids par rapport au poids total du mélange et résine filmogène de scellement et/ou résine séquestrante de 0 à 20% en poids par rapport au poids total du mélange.

10. Procédé de préparation d'un granulé, d'une paillette ou poudre d'un polymère thermoplastique et/ou thermodurcissable, coloré et/ou contenant des additifs, selon l'une quelconque des revendications 1 à 9, dans lequel il comprend les étapes suivantes :

   a) le granulé, la paillette ou la poudre de polymère à colorer et/ou à combiner avec des additifs est placé dans un mélangeur à grande vitesse et chauffé à la température de fusion de l'agent ou des agents colorants et/ou de l'additif ou des additifs, pré-dispersés dans des mélanges de cires ou d'esters d'acides gras ;
   b) l'agent ou les agents colorants et/ou l'additif ou les additifs, pré-dispersés dans des mélanges de cires ou d'esters d'acides gras, sont ajoutés dans le mélangeur et le système mélange à une grande vitesse, en maintenant le système à la température atteinte dans l'étape a), et
   c) le granulé, la paillette ou la poudre de polymère thermoplastique et/ou thermodurcissable, coloré et/ou contenant des additifs est déchargé,

   **caractérisé en ce que** le procédé prévoit une étape intermédiaire de dépôt d'un film de protection de résine filmogène de scellement et/ou de résine séquestrante entre l'étape b) et l'étape c).

**11.** Procédé selon la revendication 10, **caractérisé en ce que** le point de fusion du mélange d'agents colorants et/ou d'additifs est normalement inférieur à 100°C, et dans tous les cas inférieur au point de fusion ou au point de ramollissement du polymère, et dans le cas d'un polymère thermodurcissable, au-dessous de la température de durcissement du polymère.

**12.** Procédé selon la revendication 10, **caractérisé en ce que** les étapes a) et b) sont exécutées avec un mélange par rotation, à une vitesse de 100 à 1800 tours/minute, correspondant à une vitesse linéaire de 2 à 37 m/s environ, pendant un temps compris dans la plage de 1 à 30 minutes.

**13.** Procédé selon la revendication 10, **caractérisé en ce que** l'étape intermédiaire prévoit des étapes b1)-b3) entre l'étape b) et l'étape c) qui comprennent :

b1) l'ajout d'une quantité préétablie de résine séquestrante sous forme de poudre fine et/ou de résine filmogène de scellement en émulsion, dispersion aqueuse ou en solution ;
b2) l'exécution de l'évaporation complète de l'eau ou solvant et la coalescence de la résine de scellement et/ou la distribution et la fusion ou le ramollissement partiel de la résine séquestrante sous forme de poudre, le chauffage ultérieur à une température comprise dans la plage entre le point de fusion de la résine séquestrante et le point de fusion du polymère à colorer, le mélange ;
b3) le déchargement de la matière ainsi obtenue, éventuellement refroidie, et le conditionnement.

**14.** Procédé selon la revendication 10, **caractérisé en ce que** l'étape a) est précédée par une étape pour déterminer la couleur ou la correspondance de couleur dans laquelle la couleur intrinsèque du polymère à colorer et/ou à combiner avec des additifs est mesurée, et, par comparaison avec un échantillon de la couleur à obtenir, la composition qualitative et quantitative exacte des couleurs à utiliser pour obtenir la couleur désirée est identifiée.

**15.** Procédé selon la revendication 10, **caractérisé en ce que** le chauffage à une température plus élevée que le point de ramollissement de l'agent colorant et/ou de l'additif ou du mélange d'agents colorants et/ou d'additifs est effectué par friction mécanique ou par l'ajout approprié d'eau ou d'une autre substance qui absorbe les micro-ondes et l'irradiation par micro-ondes.

**16.** Procédé selon la revendication 10, **caractérisé en ce qu'**un vide forcé est appliqué durant le chauffage dans l'étape a).

**17.** Procédé selon la revendication 10, **caractérisé en ce qu'**un mélange d'agent colorant et/ou d'additif est déposé sur la surface du polymère à colorer et/ou à combiner avec des additifs en formant une « peau » ayant une consistance grasse, une épaisseur de quelques microns et uniformément colorée dans la couleur désirée.

# Fig.1

## Fig. 2

## Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3591409 A
- US 4915987 A
- EP 290092 A
- US 4648719 A